# EUROPÄISCHE PATENTANMELDUNG

(11) **EP 2 420 429 A2**
(43) Veröffentlichungstag der Anmeldung: **22.02.2012**
(21) Anmeldenummer: 11174524.6
(22) Anmeldetag: 19.07.2011
(51) Int. Cl.: B62B 9/14, B62B 7/14

(54) **Kinderwagenaufsatz**

(30) Priorität: 19.08.2010 DE 202010011566 U
(71) Anmelder: Hartan Kinderwagenwerk e.K., 96242 Sonnefeld-Gestungshausen (DE)
(72) Erfinder: Hartan, Rolf, 96242 Sonnefeld (DE)
(74) Vertreter: Blaumeier, Jörg

(57) **Zusammenfassung**

Kinderwagenaufsatz zum lösbaren Aufsetzen auf ein Kinderwagenfahrgestell mit zwei seitlichen lösbaren Haltemitteln für den Kinderwagenaufsatz, mit einem Rahmengestell umfassend
- zwei in der Montagestellung mit den Haltemitteln (8) des Kinderwagenfahrgestells zusammenwirkende Haltestreben (7),
- zwei über jeweils ein in wenigstens einer aufgeklappten Stellung arretierbares Schwenkgelenk (11) an den Haltestreben (7) endseitig angelenkte Seitenstreben (12),
- einen U-förmigen Rahmenbügel (17), der mit den Enden seiner Seitenarme (16) an den anderen Enden der Seitenstreben (12) über jeweils ein in wenigstens einer aufgeklappten Stellung arretierbares Schwenkgelenk (15) angelenkt ist,
wobei durch Lösen der jeweiligen Gelenkarretierungen das Rahmengestell (2) derart in eine kleinbauende Form zusammenlegbar ist, dass die Seitenstreben (12) auf den Haltestreben (7) und der Rahmenbügel (17) mit seinen Seitenarmen (16) auf den Seitenstreben (12) liegen.

## Beschreibung

Die Erfindung betrifft einen Kinderwagenaufsatz zum lösbaren Aufsetzen auf ein Kinderwagenfahrgestell mit zwei seitlichen lösbaren Haltemitteln für den Kinderwagenaufsatz, welcher Kinderwagenaufsatz ein Rahmengestell aufweist.

Bekannte Kinderwagen bestehen aus einem Kinderwagenfahrgestell und einem in sich stabilen, lösbar am Kinderwagenfahrgestell befestigbaren Kinderwagenaufsatz. Üblicherweise kann das Kinderwagenfahrgestell, beispielsweise bestehend aus zwei parallelen Scherengestellen, zusammengelegt werden. Der Kinderwagenaufsatz kann während des Zusammenlegens am Fahrgestell verbleiben, er baut jedoch, da höchstenfalls das Verdeck zusammengefaltet werden kann, bei zusammengelegtem Kinderwagen beachtlich in der Höhe auf. Der Aufsatz selbst ist an entsprechenden Haltemitteln am Kinderwagenfahrgestell lösbar befestigt, so dass er bei Bedarf entfernt werden kann, beispielsweise dann, wenn aus Platzgründen der Kinderwagen samt gestellseitig befestigtem Aufsatz nicht verstaut werden kann.

Der Kinderwagenaufsatz besteht aus einem bei bekannten Aufsätzen steifen Rahmengestell, das mit Stoffbezügen bezogen ist. Ein erster Stoffbezug bildet den Sitz und den Rücken, wozu der Bezugsstoff am entsprechenden Rahmengestellabschnitt befestigt ist. Dieser den Sitz und Rücken bildenden Stoffbezug kann auch integrierte Sitz- und Rückenplatten aufweisen, wobei die Rückenplatte häufig schwenkbar ist, um die Neigung der Platte respektive dieses Rücken- oder Liegeabschnittes einstellen zu können. Ein zweiter Stoffbezug bildet das Verdeck und ist an entsprechenden Verdeckbügeln angeordnet.

Nachteilig ist wie ausgeführt, dass der Kinderwagenaufsatz in jedem Fall beachtlich hoch aufbaut, was häufig zu Transport- und Lagerungsproblemen führt.

Der Erfindung liegt damit das Problem zugrunde, einen Kinderwagenaufsatz anzugeben, der dem gegenüber verbessert ist.

Zur Lösung dieses Problems ist ein Kinderwagenaufsatz vorgesehen, mit einem Rahmengestell umfassend:
- zwei in der Montagestellung mit den Haltemitteln des Kinderwagenfahrgestells zusammenwirkende Haltestreben,
- zwei über jeweils ein in wenigstens einer aufgeklappten Stellung arretierbares Schwenkgelenk an den Haltestreben endseitig angelenkte Seitenstreben,
- einen U-förmigen Rahmenbügel, der mit den Enden seiner Seitenarme an den anderen Enden der Seitenstreben über jeweils ein in wenigstens einer aufgeklappten Stellung arretierbares Schwenkgelenk angelenkt ist,
wobei durch Lösen der jeweiligen Gelenkarretierungen das Rahmengestell derart in eine kleinbauende Form zusammenlegbar ist, dass die Seitenstreben auf den Haltestreben und der Rahmenbügel mit seinen Seitenarmen auf den Seitenstreben liegen.

Anders als bei bisher bekannten Kindervvagenaufsätzen, die als separates, lösbares Bauteil am Gestell befestigt sind, ist der erfindungsgemäße Kinderwagenaufsatz dank der diversen Schwenkverbindungen, die rahmengestellseitig vorgesehen sind, in eine kleinbauende Form zusammenlegbar. Das Rahmengestell und mit ihm die daran befindlichen Bezüge können nach Lösen der Gelenkarretierungen quasi ziehharmonikaartig zusammengelegt werden, so dass die Seitenstreben auf den unteren Haltestreben und der Rahmenbügel mit seinen Seitenarmen auf den Seitenstreben liegen. Hieraus resultiert, dass infolge der Faltbarkeit der Kinderwagenaufsatz inklusive des daran vorgesehenen Verdecks sehr flach zusammengelegt werden kann. Seine Höhe ist sowohl bei Zusammenlegen im vom Fahrgestell gelösten Zustand als auch bei Verbleib auf dem Fahrgestell sehr niedrig. Hieraus folgt, dass die eingangs genannten Probleme bei dem erfindungsgemäßen Kinderwagenaufsatz nicht mehr gegeben sind.

Jedes Schwenkgelenk kann, ausgehend von der zusammengelegten Stellung, nur in einer aufgeschwenkten Stellung arretierbar sein. Das heißt, dass es an jedem Schwenkgelenk nur eine ausgezeichnete Arretierstellung gibt, so dass folglich auch die aufgeklappte Endstellung, in der die Schwenkgelenke arretiert sind, eindeutig definiert ist.

Zur Ermöglichung einer sicheren Arretierung ist in Weiterbildung der Erfindung jedem Schwenkgelenk ein eine Rastaufnahme aufweisendes Rastbauteil, insbesondere eine Rastscheibe zugeordnet, in die ein zum Lösen der Arretierung bewegbares Rastelement, insbesondere ein Stift, in der Arretierstellung einrastbar ist, wobei die Rastaufnahme und das Rastelement während der Schwenkbewegung relativ zueinander verdreht werden. Wird also ausgehend von der zusammengelegten Stellung der Kinderwagenaufsatz aufgeschwenkt, so werden hierbei die einzelnen miteinander über die Schwenkgelenke verbundenen Bauteile relativ zueinander bewegt und folglich die Schwenkgelenke verschwenkt. Hierbei wird jedes einem Schwenkgelenk zugeordnete Rastelement relativ zu einer gelenkseitig vorgesehenen Rastaufnahme verdreht, und zwar soweit, bis es in die ausgezeichnete Arretierstellung gelangt, in welcher dann das Rastelement in die Rastaufnahme einrastet, und aus welcher es selbstverständlich zum Zusammenlegen wieder lösbar ist.

Insgesamt sind bei dem erfindungsgemäßen Kinderwagenaufsatz vier Schwenkgelenke vorgesehen, nämlich zwei Schwenkgelenke, die die beiden Haltestreben mit den beiden Seitenstreben verbinden, sowie zwei Schwenkgelenke, die die Seitenstreben mit den Seitenarmen des Rahmenbügels verbinden. Wenngleich es möglich ist, durch entsprechende gelenkseitige Betätigungselemente jedes Schwenkgelenk selbst lösen zu können, sieht eine besonders vorteilhafte Weiterbildung der Erfindung vor, dass nur an den beiden Schwenkgelenken, über die die Seitenarme und die Seitenstreben verbunden sind, jeweils ein Betätigungselement zum Lösen der Arretierung des Schwenkgelenks vorgesehen ist, und dass von jedem dieser Schwenkgelenke eine Bewegungskopplung zu den jeweiligen Schwenkgelenken, über die die Seitenstreben mit den Haltestreben verbunden sind, verläuft, über die deren Arretierung lösbar ist. Das heißt, dass nur an den beiden Schwenkgelenken, über die der Rahmenbügel mit den Seitenstreben verbunden ist, entsprechende Betätigungselemente zum Lösen der Arretierung vorgesehen sind. Wird nun nach Lösen der Arretierung z. B. der Rahmenbügel relativ zu den Seitenstreben verschwenkt, so wird automatisch über die gegebene Bewegungskopplung, die von diesen Schwenkgelenken zu den beiden anderen Schwenkgelenken, über die die Seitenstreben mit den Haltestreben verbunden sind, verläuft, automatisch auch deren Arretierung gelöst. Das heißt, dass der Benutzer lediglich diese beiden Betätigungselemente zum Lösen der jeweiligen Arretierung lösen muss, wonach der Kinderwagenaufsatz letztlich durch einfaches Umlegen des oberen Rahmenbügel infolge des automatischen Lösens auch der unterseitigen Arretierung zusammengelegt werden kann.

Ein solches Betätigungselement ist bevorzugt ein Hebel oder ein Schieber, über den die Arretierung lösbar ist, wobei über dieses Betätigungselement insbesondere das mit ihm bewegungsgekoppelte Rastelement aus der Arretier- in die Lösestellung bewegbar ist, mithin also hierüber aus der Rastaufnahme bewegt werden kann.

Die Bewegungskopplung selbst ist bevorzugt im Inneren einer Seitenstrebe angeordnet, sie umfasst ein Zugelement, über welches das jeweilige Rastelement des jeweiligen Schwenkgelenks betätigbar ist. Bei Verwendung eines solchen Zugelements kann auch eine beachtlich große Strecke mittels der Bewegungskopplung überbrückt werden, was hier erforderlich ist, da die beiden über die Bewegungskopplung verbundenen Schwenkgelenke mindestens über die Länge der jeweiligen Seitenstrebe voneinander beabstandet sind. Das Zugelement selbst ist ein Zugdraht oder bevorzugt eine Zugstange, also ein schmales, dünnes Bauteil, das ohne weiteres in das Innere einer Seitenstrebe integriert werden kann, wodurch ein Schutz vor Verletzungen gegeben ist.

Eine besonders vorteilhafte Weiterbildung der Erfindung sieht vor, dass die Bewegungskopplung durch das Verschwenken des Rahmenbügels betätigbar und dadurch sie Arretierung lösbar ist. Das heißt, dass die Bewegungskopplung insoweit automatisiert betätigt wird, als zu ihrer Betätigung lediglich der Rahmenbügel nach Lösen der Arretierung über die Betätigungselemente zu verschwenken ist, also in Richtung der Seitenstreben zu bewegen ist. Hierbei wird, gegebenenfalls erst nach Durchlaufen eines bestimmten Verschwenkwinkels, sodann automatisch das jeweilige Zugelement mitgenommen, also gezogen, was zum Lösen auch der Arretierungen der beiden anderen, nicht über eigenen Betätigungselemente verfügenden Schwenkgelenke führt.

Um hierbei eine sichere Mitnahme des Zugelements, also eine sichere Betätigung der Bewegungskopplung zu realisieren, ist in Weiterbildung der Erfindung vorgesehen, dass die Bewegungskopplung, insbesondere das Zugelement, mit einem schwenkgelenkseitig vorgesehenen Mitnehmerabschnitt, der beim Verschwenken des Rahmenbügels dreht, verbunden ist. Hierüber ist also sichergestellt, dass das Zugelement infolge seiner Verbindung mit dem beim Bewegen des Rahmenbügels gedrehten, also bewegten Mitnehmerabschnitt zwangsläufig gezogen und folglich die Arretierung geöffnet wird. Ein solcher Mitnehmerabschnitt ist bevorzugt eine Aufnahmenut, in die ein Befestigungselement der Bewegungskopplung, insbesondere ein Haltezapfen, eingreift.

Eine besonders zweckmäßige Weiterbildung der Erfindung sieht vor, dass in die Bewegungskopplung ein elastisch verformbares Bauteil, insbesondere eine Feder integriert ist, derart, dass die Arretierung erst nach Verschwenken des Rahmenbügels um einen vorbestimmten Schwenkwinkel gelöst wird. Gemäß dieser Erfindungsausgestaltung erfolgt also das automatische Betätigen der über die Bewegungskopplungen betätigten Arretierungen nicht unmittelbar mit dem Beginn des Verschwenkens des Rahmenbügels, sondern erst, wenn der Rahmenbügel um einen vorbestimmten Schwenkwinkel verschwenkt wurde. Dies wird dadurch realisiert, dass in die Bewegungskopplung ein elastisch verformbares Bauteil, vorzugsweise eine Schraubenfeder, integriert ist. Bei Beginn der Schwenkbewegung des gelösten Rahmenbügels wird zwar die Bewegungskopplung insoweit betätigt, als beispielsweise die Zugstange gezogen wird. Jedoch arbeitet diese zunächst gegen das elastisch verformbare Bauteil, also beispielsweise die Feder. Erst wenn dieses Bauteil oder die Feder hinreichend weit komprimiert ist, greift die fortgesetzte Bewegung des Zugelements auf die Arretierung durch, diese wird dann gelöst.

Hierzu kann gemäß einer Weiterbildung der Erfindung das Bauteil, insbesondere die Feder, in einer Hülse angeordnet sein, in die die Bewegungskopplung, insbesondere das Zugelement eingreift, derart, dass bei Verschwenken des Rahmenbügels und Anziehen des Zugelements zunächst das Bauteil komprimiert wird und erst nach Erreichen eines hinreichenden Komprimierungsgrads die Hülse und das mit ihr gekoppelte Rastelement bewegt wird. Das heißt, dass mit Beginn der Bügelverschwenkung und Anziehen des Zugelements zunächst das Bauteil, also die Feder komprimiert wird. Erst wenn die Feder z. B. auf Block läuft, mithin also komplett zusammengestaucht ist, wird die Zugbewegung an das Rastelement, also den Stift, weitergegeben, der sodann aus der Rastaufnahme gezogen wird.

Wie bereits einleitend beschrieben, ist anstelle einer Kopplung der Schwenkgelenke untereinander über die jeweilige Bewegungskopplung auch die Anordnung jeweils eines manuellen Betätigungselements zum Lösen der Arretierung an jedem Schwenkgelenk denkbar. Ein solches Betätigungselement kann, wie bereits bei der zuvor beschriebenen Ausführungsform angegeben, ein Hebel oder ein Schieber sein, über den die Arretierung lösbar ist, insbesondere das mit dem bewegungsgekoppelte Rastelement aus der Arretier- und die Lösestellung bringbar ist.

Neben dem Kinderwagenaufsatz selbst betrifft die Erfindung ferner einen Kinderwagen, umfassend ein Kinderwagenfahrgestell sowie einen lösbar daran befestigten Kindervvagenaufsatz der beschriebenen Art.

Weitere Vorteile, Merkmale und Einzelheiten der Erfindung ergeben sich aus dem im Folgenden beschriebenen Ausführungsbeispiel sowie anhand der Zeichnungen. Dabei zeigen:
- Fig. 1: Eine Perspektivansicht eines erfindungsgemäßen Kinderwagenaufsatzes ohne Stoffbezüge,
- Fig. 2: eine Seitenansicht des Kinderwagenaufsatzes aus Fig. 1 mit angedeuteten Stoffbezügen,

- Fig. 3: eine Perspektivansicht des zusammengefalteten Kinderwagenaufsatzes aus den Fig. 1 und 2,
- Fig. 4: eine Seitenansicht des zusammengefalteten Kinderwagenaufsatzes aus Fig. 3,
- Fig. 5: eine Explosionsdarstellung des Kinderwagenaufsatzes aus Fig. 1, wobei lediglich die eine Hälfte des Aufsatzes dargestellt ist, und
- Fig. 6: eine Teilschnittansicht des Kinderwagenaufsatzes entsprechend der Seitenansicht aus Fig. 2.

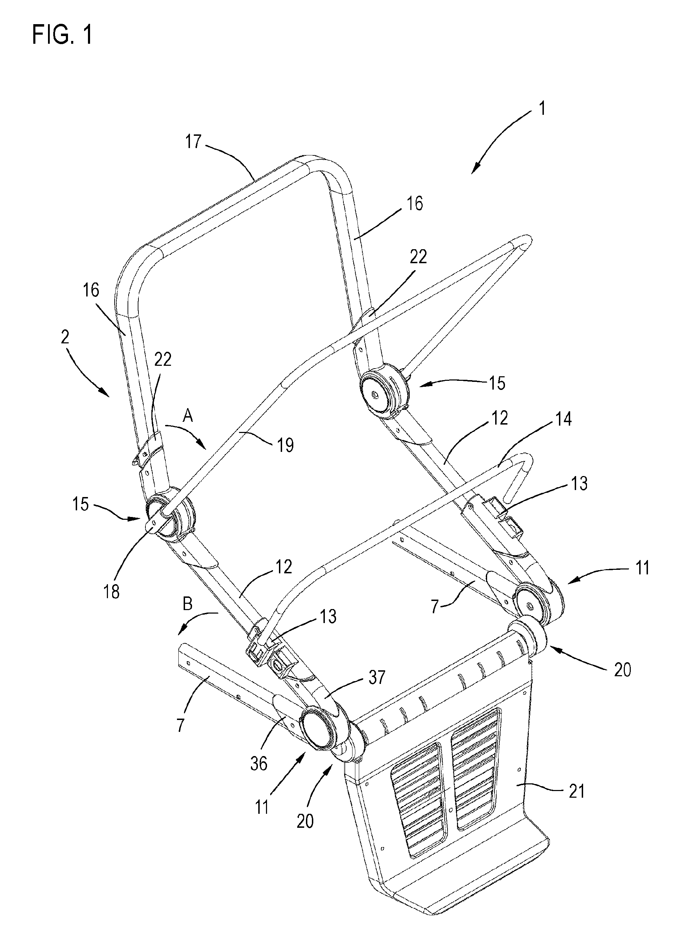

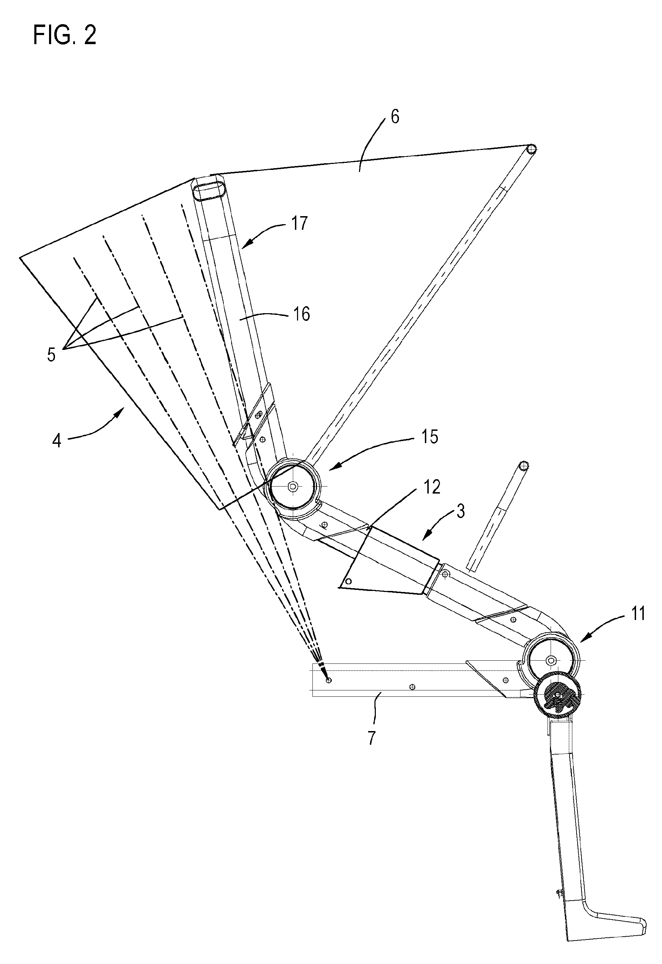

Fig. 1 zeigt einen erfindungsgemäßen Kinderwagenaufsatz 1, umfassend ein Rahmengestell 2, an dem, wie in Fig. 2 angedeutet ist, zwei Stoffbezüge 3, 4 anbringbar sind, wobei der Stoffbezug 3, der hier nur zum Teil dargestellt ist, eine Sitzfläche und eine Rückenfläche bildet, während der Stoffbezug 4 ein Verdeck 6 bildet, wozu eine nicht näher gezeigte Rückenplatte, die schwenkbar ist, in den Stoffbezug 3 integriert ist, die in verschiedene Sitzpositionen respektive Ruhepositionen verschwenkt werden kann, wie durch die gestrichelten Linien 5 dargestellt ist. Die Stoffbezüge sind lösbar am Rahmengestell 2 befestigbar. Ein näheres Eingehen hierauf ist nicht erforderlich, da die grundsätzliche Anordnung von Stoffbezügen an Rahmengestellen bekannt ist.

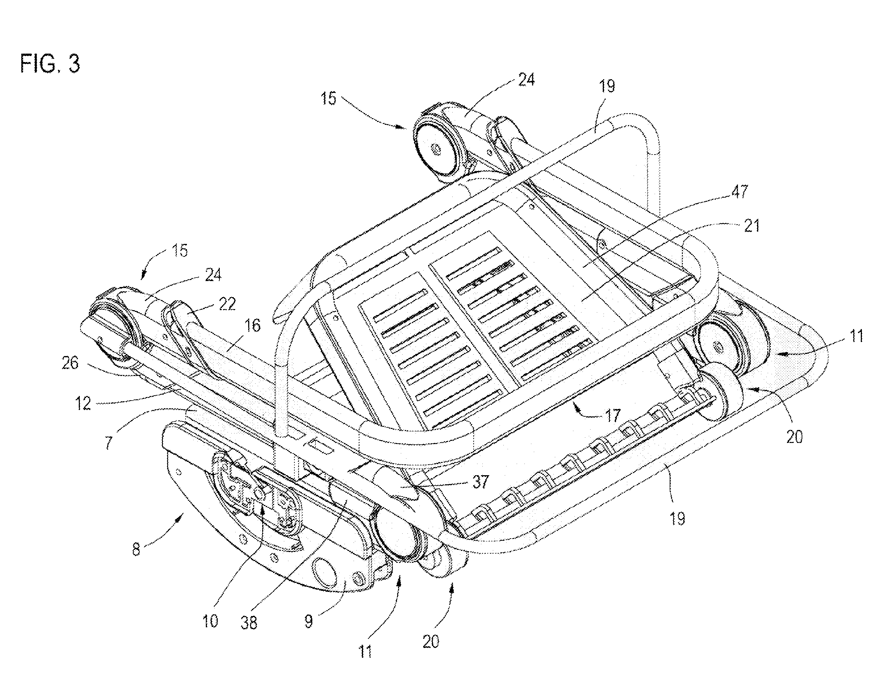

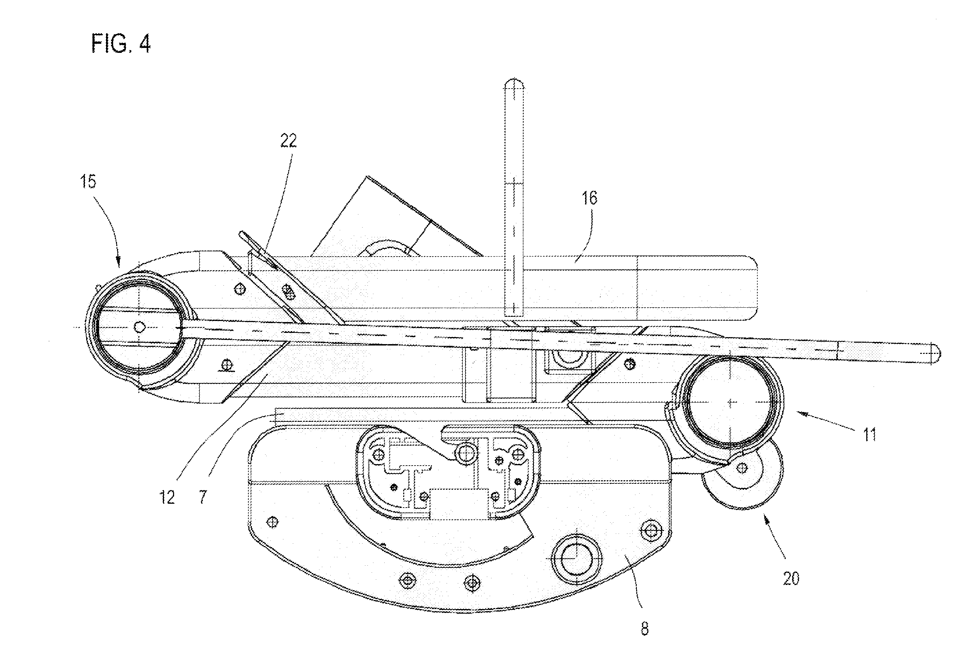

Das erfindungsgemäße Rahmengestell umfasst zwei Haltestreben 7, die, siehe Fig. 3 und 4 mit Haltemitteln 8 umfassend Strebenaufnahmen 9 mit integrierten Rastmitteln 10 zusammenwirken, welche Haltemittel 8 an einem nicht näher gezeigten Kinderwagenfahrgestell angeordnet sind. Über die Haltemittel 8 ist es möglich, den Kinderwagenaufsatz 1 lösbar am Kinderwagenfahrgestell zu befestigen. Die Ausgestaltung der Haltestreben 7 sowie der Haltemittel 8 ist derart, dass der Kinderwagenaufsatz 1 in zwei um 180 Grad zueinander verdrehten Stellungen am Kinderwagenfahrgestell befestigt werden kann, also in und gegen Fahrtrichtung.

Über zwei erste Schwenkgelenke 11 sind zwei Seitenstreben 12 schwenkbar mit den Haltestreben 7 verbunden. An den Befestigungsstreben 12 sind zwei seitliche Aufnahmen 13 für einen lösbaren Bügel 14, an dem Spielzeuge, mit denen das Kleinkind, das im Kinderwagenaufsatz aufgenommen ist, spielen kann, befestigt werden können.

Über zwei weitere zweite Schwenkgelenke 15 sind die beiden Seitenstreben 12 mit den Seitenarmen 16 eines U-förmigen Rahmenbügels 17 verbunden. Im Bereich der Schwenkgelenke 15 sind Aufnahmen 18 für einen Verdeckbügel 19, über den der Verdeckabschnitt 6 des Stoffbezugs 4 gezogen wird, vorgesehen.

Im Bereich der unteren ersten Schwenkgelenke 11 sind ferner weitere Schwenkgelenke 20 vorgesehen, an denen ein Fußkasten 21 schwenkbar und in verschiedenen Positionen arretierbar angelenkt ist, auf welchen das Kleinkind seine Füße abstützen kann.

Durch die erfindungsgemäß vorgesehenen ersten und zweiten Schwenkgelenke 11 und 15, die in der aufgeschwenkten Rahmengestellstellung, wie sie in Fig. 1 gezeigt ist, arretiert sind, worauf nachfolgend noch eingegangen wird, ist es möglich, den Kinderwagenaufsatz 1 in eine kleinformatige Form zusammenzulegen, wie in den Fig. 3 und 4 gezeigt. Hierzu wird zunächst, was nachfolgend noch im Detail beschrieben wird, über jeweilige Betätigungselemente 22 in Form eines Hebels, die im Bereich der Seitenarme 16 des Rahmenbügels 17 angeordnet sind, die Arretierung der beiden zweiten Schwenkgelenke 15 gelöst. Hieraus resultiert, dass der Rahmenbügel 17, wie durch den Pfeil A dargestellt ist, in Richtung der Seitenstreben 12 geschwenkt werden kann, wobei er in der eingefalteten Stellung, siehe die Fig. 3 und 4, mit seinen Seitenarmen in unmittelbarer Nachbarschaft oberhalb der Seitenstreben 12 liegen.

Mit dem Lösen der Arretierung der Schwenkgelenke 15 geht auch das Lösen der Arretierung der ersten Schwenkgelenke 11 einher. Werden diese gelöst, so sind die Seitenstreben 12 in Richtung der Haltestreben 7 verschwenkbar, wie durch denk Pfeil B dargestellt ist. In der eingefalteten Stellung liegen die Seitenstreben 12 unmittelbarer benachbart oberhalb der Haltestreben 7. Insgesamt ergibt sich, siehe insbesondere Fig. 4, ein sehr kleinformatiger, kompakter Faltaufbau, nachdem sämtliche Streben 7, 12 und 16 unmittelbar benachbart übereinander liegen.

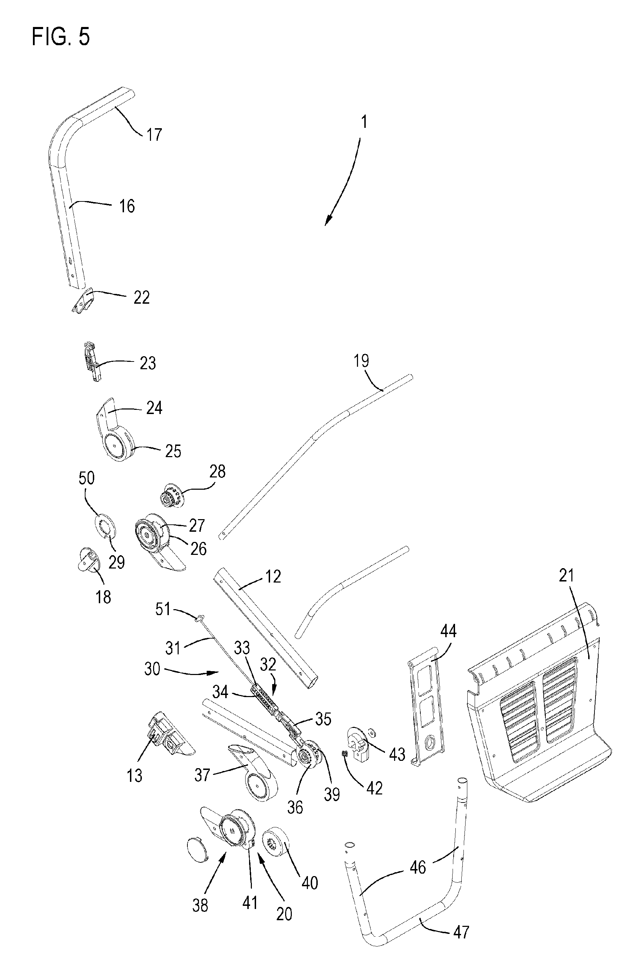

Fig. 5 zeigt eine Explosionsansicht der einen Hälfte des erfindungsgemäßen Kinderwagenaufsatzes. Am Seitenarm 16 des U-Rahmenbügels 17 ist das Betätigungselement 22, also der Hebel längsverschiebbar aufgenommen. Er ist mit einem Schieber 23 verbunden, an dem ein nicht näher gezeigtes Rastelement in Form eines quer verlaufenden Stiftes angeordnet ist. Der Hebel 22 nebst Schieber 23 ist gegen die Rückstellkraft einer nicht gezeigten Feder verschiebbar. Der Schieber 23 ist in einem Gelenkgehäuse 24 aufgenommen, das einen Schlitz 25 aufweist. In dem Gelenkgehäuse integriert ist das Gelenkgegenstück 26, das an der Seitenstrebe 12 befestigt ist. Das Gelenkgegenstück 26 weist eine verzahnte Durchbrechung 27 auf, in die ein ebenfalls verzahnter Haltezapfen 28 eingesetzt ist, der, wenn eingesetzt, eine Rastscheibe 29, die ebenfalls eine innenverzahnte Öffnung aufweist, durchgreift und fixiert. Dieser gesamte Aufbau bestehend aus Gelenkgegenstück 26, Haltezapfen 28 und Rastscheibe 29 ist im Inneren des Gelenkgehäuses 24 aufgenommen. Die Rastscheibe 29 ist folglich lagefest zur Seitenstrebe 12, während sämtliche Bauteile, die mit dem Rahmenbügel 17 in Verbindung stehen, insbesondere das Betätigungselement 22 und der Schieber 23 nebst Rastelement, relativ zur Rastscheibe 29 verschwenkt werden können. Am Schwenkgelenk 15, also dem Gelenkgehäuse 24, außenseitig, ist die bereits beschriebene Halterung 18 für den Verdeckbügel 19 befestigt.

Im Inneren einer jeden Seitenstrebe 12 befindet sich eine Bewegungskopplung 30, mit der das zweite Schwenkgelenk 15 mit dem zugeordneten ersten Schwenkgelenk 11 gekoppelt ist. Die Bewegungskopplung 30 umfasst ein Zugelement 31, hier in Form einer Zugstange, die über ein integriertes elastisches Bauteil 32, hier eine in einer Hülse 33 angeordnete Feder 34, mit einem Schiebeelement 35 verbunden ist, an dem wiederum ein Rastelement angeordnet ist, auch hier bevorzugt ein Querstift, der nicht näher gezeigt ist. Dieses Rastelement wirkt wiederum mit einer Rastscheibe 36 zusammen, um das Schwenkgelenk 11 in die Arretierstellung zu fixieren. Das Schwenkgelenk 11 ist insoweit identisch zum Schwenkgelenk 15 aufgebaut, das heißt, es umfasst ebenfalls ein Gelenkgehäuse 37, in dem das Gelenkgegenstück 38, in das wiederum die mit dem Rastelement zusammenwirkende Rastscheibe 36 nebst Haltezapfen 39 eingesetzt ist.

Im Bereich eines jeden ersten Schwenkgelenks 11 befindet sich ferner das weitere Schwenkgelenk 20, umfassend eine innenverzahnte Hülse 40, die mit einem Verzahnungsabschnitt 41 und einem über eine Feder 42 vorgespannten Schieber 43 in Verbindung steht. Der Schieber 43 ist über eine nicht näher gezeigte Stange mit einer Zugplatte 44 verbunden, die hinter dem Fußkasten 21 angeordnet ist. An den Schiebern 43 befindet sich jeweils ein Arm 46 eines U-Bügels 47, der den Fußkasten 21 stützt. Durch Ziehen der Platte 44 wird der Schieber 43 gegen die Feder 42 bewegt, worüber die Verzahnung im Bereich der verzahnten Hülse 40 gelöst wird und der Fußkasten verschwenkt werden kann. Wird die Platte 44 entlastet, greift die Verzahnung wieder ein. Diese ermöglicht es, den Fußkasten 21 in verschiedene Raststellungen zu verschwenken.

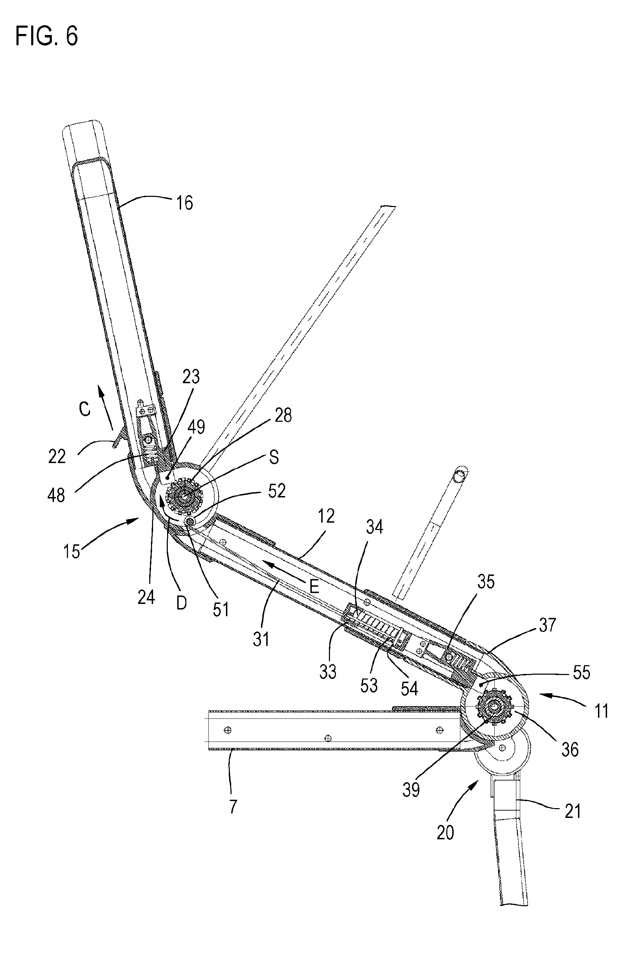

Die Funktion zum Lösen der Arretierungen ergibt sich anschaulich aus Fig. 6. Wird das Betätigungselement 22 in Richtung des Pfeils C bewegt, so wird gegen die Rückstellkraft der hier gezeigten Feder auf den Schieber 23 in Richtung des Pfeils C gezogen. Hierbei wird das hier gezeigte Rastelement 49 in Form eines Stifts aus der Rastaufnahme 50, die an der Rastscheibe 29 als nutförmige Eintiefung ausgeführt ist, herausgezogen. Dies führt dazu, dass der Rahmenbügel 17 um das Schwenkgelenk 15 geschwenkt werden kann, dieses ist also gelöst.

Durch den Schlitz 25 hindurch läuft das Zugelement 31, also die Zugstange. Diese weist an ihrem freien Ende einen Haltebolzen 51 auf. Dieser ist am Gelenkgehäuse 24 befestigt. Dieses Gelenkgehäuse 24, das fest mit dem jeweiligen Seitenarm 16 des Rahmenbügels 17 verbunden ist, dreht um die Schwenkachse S beim Verschwenken des Rahmenbügels 17. Hierbei wird, wie durch den Pfeil D gezeigt ist, folglich auch der Haltezapfen 51, der dort in einer geeigneten Mitnehmeraufnahme 52 eingesetzt ist, bewegt und in Richtung des Pfeils E gezogen. Dies führt dazu, dass auch das untere Ende 53 des Zugelements 31, an dem eine Platte 54 oder ähnliches angeordnet ist, in Richtung des Pfeils E bewegt wird. Auf dieser Platte 54 ist die Feder 34 aufgelagert. Diese wird nun in der Hülse 33, die bis dahin lagefest ist, komprimiert. Je weiter der Rahmenbügel 17 verschwenkt wird, umso weiter wird das Zugelement 31 gezogen, und umso stärker wird die Feder 34 kombiniert. Ist ein hinreichender Komprimierungsgrad erreicht, beispielsweise wenn die Feder 34 vollständig zusammengedrückt ist, also auf Block liegt, so wird bei einer weiteren Verschwenkung des Rahmenbügels 17 und einem weiteren Ziehen des Zugelements 31 in Richtung des Pfeils E die Hülse ebenfalls in Richtung des Pfeils E gezogen, was dazu führt, dass das mit ihr verbundene Schieberelement 35 ebenfalls in Richtung des Pfeils E gezogen wird. An diesem befindet sich wie beschrieben das Rastelement 55, wiederum beispielsweise ein Raststift, der in eine gleichartige Rastaufnahme an der Rastscheibe 36 in der Raststellung eingreift, wie sie an der Rastscheibe 29 im Detail gezeigt ist. Bei einer Bewegung des Schiebeschlittens 35 jedoch wird er aus dieser Rastaufnahme gezogen, so dass das zugeordnete erste Schwenkgelenk 11 gelöst wird und die jeweilige Seitenstrebe 12 nach unten in Richtung der jeweiligen Haltestrebe 7 schwenken kann.

Über die Bewegungskopplung 30 ist folglich eine automatische Arretierungsbetätigung realisiert, die automatisch durch Verschwenken des Rahmenbügels 17 nach Lösen der Arretierung der beiden ersten Schwenkgelenke 15 betätigt wird. Die Betätigung der Arretierung der ersten Schwenkgelenke 11 auf automatische Weise erfolgt jedoch erst, wenn der Rahmenbügel 17 einen definierten Schwenkwinkel durchlaufen hat, wenn er also hinreichend weit in Richtung der beiden Seitenstreben 12 verschwenkt wurde. Dies bietet ein hohes Maß an Sicherheit dahingehend, dass nicht bereits bei einer sehr geringen Bügelverschwenkung sogleich auch das Öffnen der ersten Schwenkgelenke 11 und folglich das Zusammenfallen des Aufsatzes erfolgt, sondern erst, wenn sicher ist, dass der Benutzer ganz bewusst das Zusammenlegen wünscht und er hierzu eben den Rahmenbügel 17 hinreichend weit aktiv verschwenkt hat.

Wie insbesondere Fig. 4 zeigt, kann durch die Integration der vier Schwenkgelenke 11, 15 und die daraus resultierende Möglichkeit des ziehharmonikaartigen Zusammenlegens des Rahmengestells 2 der erfindungsgemäße Kinderwagenaufsatz sehr kleinformatig zusammengelegt werden, wobei dies auch dann möglich ist, wenn der Kinderwagenaufsatz, wie in Fig. 4 gezeigt ist, an den Haltemitteln 8 des Kindervvagengestells befestigt ist.

Zum Zusammenlegen ist es ferner möglich, siehe beispielsweise Fig. 3, vor dem Betätigen der Betätigungselemente 22 den Fußkasten 21 hoch zu schwenken, also auf den ersten Stoffbezug, was auf einfache Weise dadurch möglich ist, dass über die Platte 44 die unteren weiteren Schwenkgelenke 20 gelöst und der Fußkasten 21 hochgeschwenkt werden kann. Dieses Verschwenken erfolgt um die Schwenkachse, die durch die Schwenkgelenke 20 läuft und von der nicht näher gezeigten Querstrebe gebildet ist, die auch den Fußkasten 21 in einer geeigneten Strebenaufnahme durchsetzt.

## Patentansprüche

1. Kinderwagenaufsatz zum lösbaren Aufsetzen auf ein Kinderwagenfahrgestell mit zwei seitlichen lösbaren Haltemitteln für den Kinderwagenaufsatz, mit einem Rahmengestell umfassend
- zwei in der Montagestellung mit den Haltemitteln (8) des Kinderwagenfahrgestells zusammenwirkende Haltestreben (7),
- zwei über jeweils ein in wenigstens einer aufgeklappten Stellung arretierbares Schwenkgelenk (11) an den Haltestreben (7) endseitig angelenkte Seitenstreben (12),
- einen U-förmigen Rahmenbügel (17), der mit den Enden seiner Seitenarme (16) an den anderen Enden der Seitenstreben (12) über jeweils ein in wenigstens einer aufgeklappten Stellung arretierbares Schwenkgelenk (15) angelenkt ist,
wobei durch Lösen der jeweiligen Gelenkarretierungen das Rahmengestell (2) derart in eine kleinbauende Form zusammenlegbar ist, dass die Seitenstreben (12) auf den Haltestreben (7) und der Rahmenbügel (17) mit seinen Seitenarmen (16) auf den Seitenstreben (12) liegen.

2. Kindervvagenaufsatz nach Anspruch 1, **dadurch gekennzeichnet, dass** jedes Schwenkgelenk (11, 15) - ausgehend von der zusammengelegten Rahmenform - nur in einer aufgeschwenkten Stellung arretierbar ist.

3. Kindervvagenaufsatz nach Anspruch 1 oder 2, **dadurch gekennzeichnet, dass** jedem Schwenkgelenk (11, 15) ein eine Rastaufnahme (50) aufweisendes Rastbauteil, insbesondere eine Rastscheibe (29, 36) zugeordnet ist, in die ein zum Lösen der Arretierung bewegbares Rastelement, insbesondere ein Stift (49, 55), in der Arretierstellung einrastbar ist, wobei die Rastaufnahme (50) und das Rastelement (49, 55) während der Schwenkbewegung relativ zueinander verdreht werden.

4. Kinderwagenaufsatz nach einem der vorangehenden Ansprüche, **dadurch gekennzeichnet, dass** nur an den beiden Schwenkgelenken (15), über die die Seitenarme (16) und die Seitenstreben (12) verbunden sind, jeweils ein Betätigungselement (22) zum Lösen der Arretierung des Schwenkgelenks (15) vorgesehen ist, und dass von jedem dieser Schwenkgelenke (15) eine Bewegungskopplung (30) zu den jeweiligen Schwenkgelenken (11), über die die Seitenstreben (12) mit den Haltestreben (7) verbunden sind, verläuft, über die deren Arretierung lösbar ist.

5. Kinderwagenaufsatz nach Anspruch 4, **dadurch gekennzeichnet, dass** das Betätigungselement (22) ein Hebel oder ein Schieber ist, über den die Arretierung lösbar ist, insbesondere das mit ihm bewegungsgekoppelte Rastelement (49) aus der Arretier- in die Lösestellung bewegbar ist.

6. Kinderwagenaufsatz nach Anspruch 4 oder 5, **dadurch gekennzeichnet, dass** die Bewegungskopplung (30) eine vorzugsweise im Inneren einer Seitenstrebe (12) geführtes Zugelement (31), über das das jeweilige Rastelement (55) des jeweiligen Schwenkgelenks (11) bewegbar ist, umfasst.

7. Kinderwagenaufsatz nach Anspruch 6, **dadurch gekennzeichnet, dass** das Zugelement (31) ein Zugdraht oder eine Zugstange ist.

8. Kinderwagenaufsatz nach einem der Ansprüche 4 bis 7, **dadurch gekennzeichnet, dass** die Bewegungskopplung (30) durch das Verschwenken des Rahmenbügels (17) betätigbar und dadurch die Arretierung lösbar ist.

9. Kinderwagenaufsatz nach Anspruch 8, **dadurch gekennzeichnet, dass** die Bewegungskopplung (30), insbesondere das Zugelement (31), mit einem schwenkgelenkseitig vorgesehenen Mitnehmerabschnitt (52), der beim Verschwenken des Rahmenbügels (17) dreht, verbunden ist.

10. Kinderwagenaufsatz nach Anspruch 9, **dadurch gekennzeichnet, dass** der Mitnehmerabschnitt (52) eine Aufnahmenut für ein Befestigungselement (51) der Bewegungskopplung (30), insbesondere einen Haltezapfen, ist.

11. Kinderwagenaufsatz nach einem der einem der Ansprüche 8 bis 10, **dadurch gekennzeichnet, dass** in die Bewegungskopplung (30) ein elastisch verformbares Bauteil (34), insbesondere eine Feder integriert ist, derart, dass die Arretierung erst nach Verschwenken des Rahmenbügels (17) um einen vorbestimmten Schwenkwinkel gelöst wird.

12. Kinderwagenaufsatz nach Anspruch 11, **dadurch gekennzeichnet, dass** das Bauteil (34), insbesondere die Feder, in einer Hülse (33) angeordnet ist, in die die Bewegungskopplung (30), insbesondere das Zugelement (31) eingreift, derart, dass bei Verschwenken des Rahmenbügels (17) und Anziehen des Zugelements (31) zunächst das Bauteil (34) komprimiert wird und erst nach Erreichen eines hinreichenden Komprimierungsgrads die Hülse (33) und das mit ihr gekoppelte Rastelement (55) bewegt wird.

13. Kinderwagenaufsatz nach Anspruch 1 bis 3, **dadurch gekennzeichnet, dass** an jedem Schwenkgelenk (11, 15) ein manuelles Betätigungselement (22) zum Lösen der Arretierung des Schwenkgelenks (11, 15) vorgesehen ist.

14. Kinderwagenaufsatz nach Anspruch 13, **dadurch gekennzeichnet, dass** das Betätigungselement (22) ein Hebel oder ein Schieber ist, über den die Arretierung lösbar ist, insbesondere das mit ihm bewegungsgekoppelte Rastelement aus der Arretier- in die Lösestellung bewegbar ist.

15. Kinderwagen, umfassend ein Kinderwagenfahrgestell sowie einen lösbar daran befestigten Kinderwagenaufsatz (1) nach einem der vorangehenden Ansprüche.
